# EUROPÄISCHE PATENTANMELDUNG

(11) **EP 4 300 088 A1**
(43) Veröffentlichungstag der Anmeldung: **03.01.2024**
(21) Anmeldenummer: 22181453.6
(22) Anmeldetag: 28.06.2022
(51) Int. Cl.: G01N 27/02, G05B 23/00

(54) **VERFAHREN ZUR ANALYSE EINER MATERIALZUSAMMENSETZUNG EINES TESTOBJEKTS UND AUTOMATISIERUNGSKOMPONENTE**

(71) Anmelder: Siemens Aktiengesellschaft, 80333 München (DE)
(72) Erfinder: Griessbach, Gunter, 09423 Gelenau (DE)
(74) Vertreter: Siemens Patent Attorneys

(57) **Zusammenfassung**

Die Erfindung betrifft ein Verfahren zur Analyse einer Materialzusammensetzung eines Testobjekts (40), bei welchem
- mit einer Impedanz-Messeinheit (5) mit einem elektrischen Prüfsignal (PS) ein von einer Frequenz (f) und/oder einer Amplitude des Prüfsignals (PS) abhängiges Impedanzspektrum (ImS) über einen Sensor (6) von dem Testobjekt (40) aufgenommen wird,
- in einer Zuordnungstabelle (9) unterschiedliche Materialzusammensetzungen (Mi) gespeichert werden,
- jeweils ein Prüfling (Pi) für jede Materialzusammensetzung (Mi) bereitgestellt wird,
- in einer Erfassungs-Phase (EP) für das Testobjekt (40) der jeweilige Prüfling (Pi) eingesetzt wird und mit der Impedanz-Messeinheit (5) eine vorgebbare Anzahl (N) von Testspektren (TSik) von dem jeweiligen Prüfling (Pi) aufgenommen werden und diese Anzahl an Testspektren (TSik) als ein Materialzusammensetzung (Mi) spezifischer Trainings-Datensatz (TDS) in einer Probenerfassungseinheit (10) hinterlegt wird,
- in einer Lernphase (LP) für die Anzahl (N) an Testspektren (TSik) der jeweiligen Materialzusammensetzungen (Mi) ein spezifisches neuronales Netz (NNi) angelernt wird,
- in einer Analyse-Phase (AP) ein aktuell aufgenommenes Impedanzspektrum (ImS) des Testobjektes (40) mit den Materialzusammensetzungen (Mi) spezifischen neuronalen Netzen (NNi) analysiert wird und als Ergebnis die Materialzusammensetzung (Mi) ausgegeben wird, welche für das zu analysierende Impedanzspektrum (ImS) die höchste Übereinstimmung zu dem jeweiligen Materialzusammensetzungen (Mi) spezifischen neuronalen Netz (NNi) ergeben hat.

## Beschreibung

Die Erfindung betrifft ein Verfahren zur Analyse einer Materialzusammensetzung eines Testobjekts, bei welchem mit einer Impedanz-Messeinheit mit einem elektrischen Prüfsignal ein von einer Frequenz und/oder einer Amplitude des Prüfsignals abhängiges Impedanzspektrum über einen Sensor von dem Testobjekt aufgenommen wird.

Ebenso betrifft die Erfindung eine Automatisierungskompenente umfassend eine Impedanz-Messeinheit ausgestaltet mit einem elektrischen Prüfsignal ein von einer Frequenz und/oder einer Amplidute des Prüfsignals abhängiges Impedanzspektrum über einen Sensor von einem Testobjekt aufzunehmen.

Aus der Messung von Impedanzen eines Testobjektes bei unterschiedlichen Frequenzen lassen sich Eigenschaften des Testobjektes aufzeigen. Das Messverfahren ist unter den Namen Impedanz-Spektroskopie bekannt.

Für eine Impedanzmessung gibt es bereits geeignete Messgeräte. Diese erlauben die Impedanzmessung bei verschiedenen Frequenzen. Die daraus resultierenden komplexen Impedanzwerte können danach zu einem Verlauf über die Frequenz dargestellt werden, nämlich dem Impedanzspektrum. Üblich ist eine Ermittlung des Impedanzspektrums mithilfe spezieller Sensoren, die es erlauben, unterschiedliche Testobjekte oder Materialien zu untersuchen.

Im Gegensatz zu elektrischen Bauteilen, bei denen die Impedanzen hauptsächlich durch physikalische Zusammenhänge beschrieben werden und berechenbar sind, gibt es auch Impedanzverläufe die nicht ohne weiteres physikalischen Gesetzmäßigkeiten zuordenbar sind.

Es ist Aufgabe der vorliegenden Erfindung, insbesondere für die fertigungstechnische Automatisierungstechnik, ein Verfahren zur Analyse einer Materialzusammensetzung eines Testobjektes anzugeben, und zwar für Testobjekte bei welchen die Impedanzverläufe nicht durch physikalische Gesetzmäßigkeiten, beispielsweise durch Berechnung einer Formel, verifizierbar sind.

Die Aufgabe wird durch ein Verfahren zur Analyse einer Materialzusammensetzung eines Testobjektes dadurch gelöst, dass mit einer Impedanz-Messeinheit mit einem elektrischen Prüfsignal ein von einer Frequenz und/oder einer Amplitude des Prüfsignals abhängiges Impedanzspektrum über einen Sensor von dem Testobjekt aufgenommen wird, wobei in einer Zuordnungstabelle unterschiedliche Materialzusammensetzungen gespeichert werden, wobei jeweils ein Prüfling für jede Materialzusammensetzung bereitgestellt wird, wobei in einer Erfassungs-Phase für das Testobjekt der jeweilige Prüfling eingesetzt wird und mit der Impedanz-Messeinheit eine vorgebbare Anzahl von Testspektren von dem jeweiligen Prüfling aufgenommen werden und diese Anzahl an Testspektren als ein Materialzusammensetzung spezifischer Trainings-Datensatz in einer Probenerfassungseinheit hinterlegt wird, in einer anschließenden Lern-Phase wird für die Anzahl an Testspektren der jeweiligen Materialzusammensetzungen ein Materialzusammensetzung spezifisches neuronales Netz angelernt, in einer danach stattfindenden für den Fertigungsprozess entscheidenden Analyse-Phase wird ein aktuell aufgenommenes Impedanzspektrum des Testobjektes mit den Materialzusammensetzung spezifischen neuronalen Netzen analysiert und als Ergebnis der Analyse wird die Materialzusammensetzung ausgegeben, welches für das zu analysierende Impedanzspektrum die höchste Übereinstimmung zu den jeweiligen Materialzusammensetzungen spezifischen neuronalen Netz ergeben hat.

Im Sinne der Erfindung bilden neuronale Netze, also künstliche neuronale Netze, Neuronenstrukturen mit erlerntem Wissen ab. Aus dem Bereich der künstlichen Intelligenz gibt es ein Knowledge discovery in data base Verfahren, welches oft auch als data mining bezeichnet wird. Aus diesem Data Mining leitet sich der generelle Anspruch ab, unbekannte Zusammenhänge aus meist sehr großen Datenbeständen zu entdecken. Dabei werden die verwendeten Algorithmen verschieden betrieben, also ohne Vorgabe expliziter Ergebniserwartungen, die Datenbestände zu analysieren. Insbesondere Materialien bei der automatisierungstechnischen Fertigung unterliegen herstellungs- bzw. chargenbedingten Schwankungen.

Die Erfindung bietet den Vorteil, Testobjekte zu analysieren, bei denen der Zusammenhang zwischen Objekteigenschaften und Impedanzspektrum nicht durch physikalische Gesetzmäßigkeiten analytisch beschreibbar ist.

In einer Weiterbildung des Verfahrens wird in der Zuordnungstabelle eine Soll-Materialzusammensetzung des Testobjektes abgespeichert und für die weiteren Materialzusammensetzungen werden bekannte Abweichungen in der Zusammensetzung zu der Soll-Materialzusammensetzung gewählt, wobei anhand der in der Analyse-Phase ermittelten Materialzusammensetzungen mithilfe der Soll-Materialzusammensetzung eine aktuelle Abweichung der Materialzusammensetzung von der Soll-Materialzusammensetzung bestimmt wird.

Der Erfinder hat erkannt, dass im Unterschied zu bekannten Verfahren der Impedanzspektrokopie es nun möglich ist, in der Kombination mit einer auf KI-Verfahren basierten Auswerteeinrichtungen im Zusammenspiel mit einem Automatisierungsgerät in der Fertigungstechnik eine Materialanalyse bereitzustellen, insbesondere für Materialien, welche sich nicht durch physikalische oder chemische Formen beschreiben lassen. Daraus ergibt sich der Vorteil, dass in einem Anlernprozess bestimmte Impedanzverläufe konkreten Eigenschaften des Testobjektes zugeordnet werden können. Im laufenden Fertigungsprozess kann dann in einer Echtzeit eine Klassifizierung der Eigenschaften erfolgen. Durch diese Klassifizierung ist eine Kmo und/oder Überwachung der Qualitätsmerkmale des Testobjektes möglich.

Im Zusammenspiel mit einem Automatisierungsgerät besteht dann die Möglichkeit der Steuerung oder Regelung des Prozesses. Dazu sieht das erfindungsgemäße Verfahren in einer Weiterbildung zur Anwendung in einem Fertigungsprozess des Testobjektes vor, mit der Kenntnis der Abweichung der Materialzusammensetzung derart in den Fertigungsprozess eingreifen zu können, dass das Testobjekt wieder die Soll-Materialzusammensetzung aufweist.

Ein noch verbesserter Verfahrensschritt sieht vor, dass die Erfassungs-Phase auf einer lokalen Automatisierungskomponente durchgeführt wird, und die Materialzusammensetzung spezifischen Trainings-Datensätze an ein übergeordnetes Rechensystem gesendet werden, wobei die Lernphase auf dem übergeordneten Rechensystem durchgeführt wird, und die erlernten oder errechnete Materialzusammensetzung spezifischen neuronalen Netze von dem übergeordneten Rechensystem an die lokale Automatisierungskomponente zurückgesendet werden und für die Analyse-Phase in der Automatisierungskomponente abgespeichert werden.

Verfahrensgemäß kann dann ein Automatisierungsgerät modular aufgebaut sein und sogar als ein mobiler Aufbau ausgestaltet sein. Dieser mobile Aufbau könnte dann ausschließlich dem Anlernen der KI-Applikationen dienen. Die Datensätze könnten dann beispielsweise in einen Cloudservicedienst eingespeist werden und es würde als Ergebnis ein angelerntes neuronales Netz zurückgeliefert werden. Das angelernte neuronale Netz wird dann auf dem modularen Automatisierungsgerät gespeichert und kann dann in die im Prozess befindliche Anlage integriert werden. Ein Download des neuronalen Netzwerkes während des Betriebes der Anlage ist ebenfalls vorstellbar.

Eine weitere Verbesserung in der Aussagekraft der Analyse wird dadurch erreicht, dass das Impedanzspektrum als komplexwertiger Verlauf der Frequenz angegeben wird, und für einen Betrag, einen Phasenwinkel, einen Realteil und einen Imaginärteil jeweils separate Materialzusammensetzung spezifische neuronale Netze angelernt werden, welche in der Analyse-Phase für den Vergleich mit dem aktuell aufgenommenen Impedanzspektrum parallel arbeiten um eine Genauigkeit der Aussage zu der zu ermittelnden Materialzusammensetzung zu erhöhen.

Bei der Auswertung des Impedanzspektrums in Form einer Klassifizierung durch neuronale Netzwerke können in diesen einzelnen Darstellungsformen, also Betrag, Phase, Realteil und Imaginärteil, auch in parallel arbeitenden, getrennten Netzwerken Materialzusammensetzungen berechnet werden. Die Eigenschaften der zu untersuchenden Substanz können sich unterschiedlich auf die einzelnen Darstellungsformen (Betrag, Phase, Realteil und Imaginärteil) auswirken und damit ist eine genauere Trefferquote bei der Klassifizierung in den neuronalen Netzen möglich.

Für eine Automatisierungskomponente umfassend eine Impedanzmesseinheit ausgestaltet mit einem elektrischen Prüfsignal ein von einer Frequenz und/oder einer Amplitude des Prüfsignals abhängiges Impedanzspektrum über einen Sensor von einem Testobjekt aufzunehmen, wobei ein Prozessorbaustein ausgestaltet ist, neuronale Netze zu verarbeiten, und ein Datenspeicher in dem ein neuronales Netz abgespeichert ist, wird die eingangs genannte Aufgabe dadurch gelöst, dass eine Zuordnungstabelle, in welcher unterschiedliche Materialzusammensetzungen gespeichert sind, eine Probenerfassungseinheit, welche ausgestaltet ist in einer Erfassungsphase mittels der Impedanzmesseinheit eine vorgebbare Anzahl von Testspektren für die in der Zuordnungstabelle angegebenen Materialzusammensetzungen aufzunehmen, vorhanden sind, weiterhin ist ein Datenmanager ausgestaltet die Anzahl an Testspektren als Materialzusammensetzung spezifischen Trainings-Datensätze in der Probenerfassungseinheit zu hinterlegen und zu verwalten, eine Schnittstelle ist ausgestaltet zu einem Lernmittel eine Verbindung aufzunehmen, wobei das Lernmittel ausgestaltet ist in einer Lernphase für die jeweiligen Trainings-Datensätze jeweils ein Materialzusammensetzung spezifisches neuronales Netz bereitzustellen, der Datenspeicher ist ausgestaltet, dass in ihm die spezifischen neuronalen Netze abgespeichert sind, wobei der Prozessorbaustein ausgestaltet ist es zu ermöglichen in einer Analyse-Phase das aktuell aufgenommene Impedanzspektrum mit den spezifischen neuronalen Netzen zu analysieren und als Ergebnis die Materialzusammensetzung auszugeben, welche für das zu analysierende Impedanzspektrum die höchste Übereinstimmung zu dem jeweiligen Materialzusammensetzung spezifischen neuronalen Netz ergeben hat.

Die Automatisierungsomponente wird dadurch verbessert, dass in der Zuordnungstabelle eine Soll-Materialzusammensetzung des Testobjektes abgespeichert ist und die weiteren Materialzusammensetzungen mit bekannten Abweichungen in der Zusammensetzung zu der Soll-Materialzusammensetzung abgespeichert sind, wobei ein Berechnungsmittel vorhanden ist, wobei es ausgestaltet ist, anhand der in der Analyse-Phase ermittelten Materialzusammensetzung mithilfe der Soll-Materialzusammensetzung die Abweichung der Materialzusammensetzungen zu bestimmen.

Durch den Anlernprozess werden in der späteren Lernphase bestimmten Impedanzverläufen die konkreten Eigenschaften des Testobjektes zugeordnet. In einem laufenden Prozess kann dann in Echtzeit eine Klassifizierung der Eigenschaften erfolgen. Durch diese Klassifizierung ist eine Kontrolle/Überwachung der Qualitätsmerkmale des Testobjektes möglich. Im Zusammenspiel mit einem Automatisierungsgerät besteht weiterhin die Möglichkeit der Steuerung oder der Regelung des Fertigungsprozesses.

Dazu ist die Automatisierungskomponente zur Anwendung in einem Fertigungsprozess des Testobjektes mit einer Meldeeinheit ausgestaltet, welche wiederum ausgestaltet ist die Abweichung der Materialzusammensetzung einer Regel- und/oder Steuereinheit mitzuteilen, welche wiederum ausgestaltet ist in den Fertigungsprozess einzugreifen, so dass das zu fertigende Testobjekt wieder die Sollmaterialzusammensetzung aufweist.

Um die Trainings-Datensätze auszulagern oder beispielsweise in einem Cloudservice verarbeiten zu lassen ist die Automatisierungskomponente mit einer Datentransfereinheit ausgestaltet, welche ausgestaltet ist mit dem Datenmanager die Materialzusammensetzung spezifischen Trainings-Datensätze an ein übergeordnetes Rechensystem zu senden.

Durch einen modularen Aufbau eines Automatisierungsgerätes könnte man insbesondere mit der Automatisierungskomponente einen mobilen Aufbau realisieren. Der mobile Aufbau könnte dann ausschließlich mit dem Anlernen einer KI-Applikation betraut sein. Das angelernte neuronale Netz kann dann später auf die Automatisierungskomponente zurückgespeichert werden.

Die Zeichnung zeigt ein Ausführungsbeispiel der Erfindung, dabei zeigt die
- FIG 1: eine Automatisierungskomponente zur Analyse einer Materialzusammensetzung,
- FIG 2: den Verfahrensablauf in einer symbolischen Darstellung von unterschiedlichen Phasen und
- FIG 3: eine Verdeutlichung der Ermittlung von Testspektren durch zuvor besonders präparierte Prüflinge.

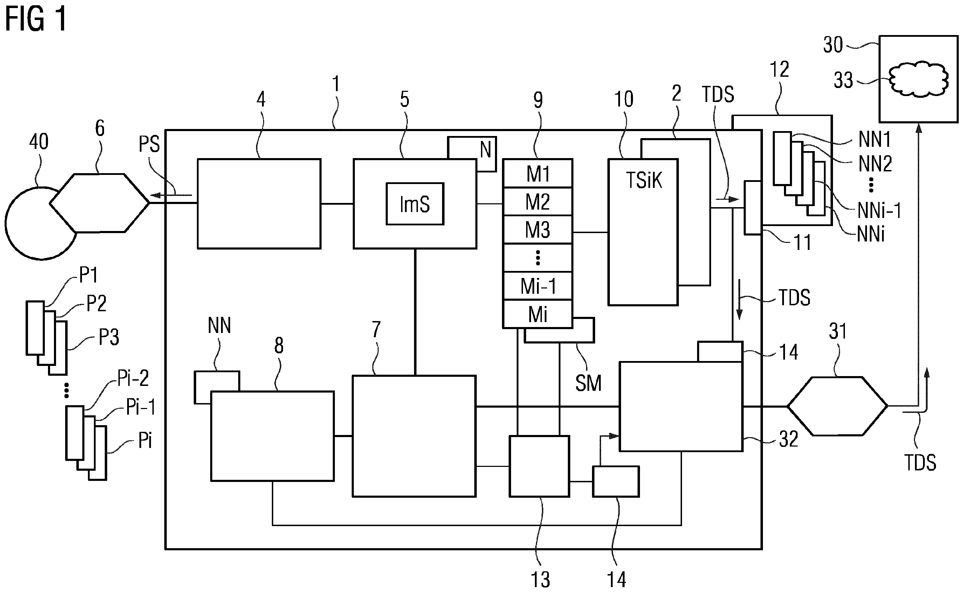

Die FIG 1 zeigt eine Automatisierungskomponente 1, welche ausgestaltet ist zur Analyse einer Materialzusammensetzung Mi eines Testobjekts 40. Das Testobjekt 40 wird über einen Sensor 6 mittels eines Prüfsignals PS analysiert. Eine Impedanzmesseinheit 5 ist dazu ausgestaltet, mit dem elektrischen Prüfsignal PS ein von einer Frequenz und/oder einer Amplitude des Prüfsignals PS abhängiges Impedanzspektrum ImS über den Sensor 6 von dem Testobjekt 40 aufzunehmen. Zwischen dem Sensor 6 und der Impedanzmesseinheit 5 ist ein sensorspezifisches Sensorinterface 4 angeordnet.

Zur Auswertung eines neuronalen Netzes NN weist die Automatisierungskomponente 1 einen Prozessorbaustein 7 auf. Der Prozessorbaustein 7 ist mit einem Datenspeicher 8 gekoppelt, in welchem das oder die neuronalen Netze NNi abgespeichert werden.

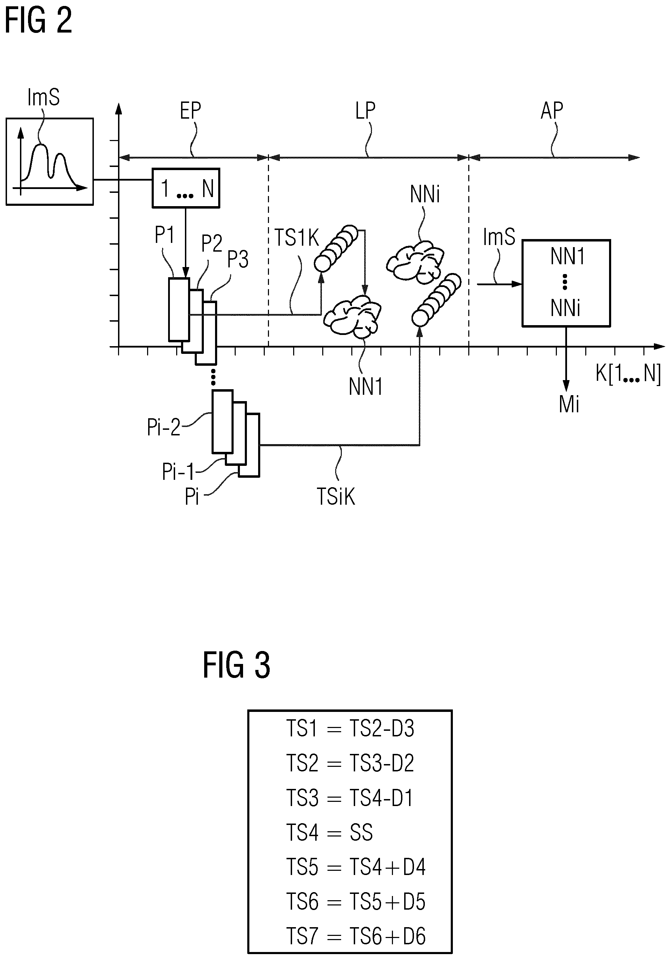

Für eine Erfassungs-Phase EP (siehe FIG 2) wird für das Testobjekt i,O jeweils ein Prüfling Pi eingesetzt und mit der Impedanz-Messeinheit 5 wird eine vorgebbare Anzahl N = 100 an Testspektren TSi1,...,100 von dem jeweiligen Prüfling Pi aufgenommen. Diese Anzahl N = 100 an Testspektren werden als ein Materialzusammensetzung Mi spezifischer Trainings-Datensatz TDs in einer Probenerfassungseinheit 10 hinterlegt.

Das bedeutet, in einer ersten Erfassung-Phase EP wird ein erster Prüfling P1, welcher einer ersten Materialzusammensetzung Mi entspricht, zur Messung von eben dieser Materialzusammensetzung entsprechenden Testspektren bereitgestellt. Demnach sind in der Zuordnungstabelle 9 so viele Materialzusammensetzungen Mi abgespeichert, wie es Prüflinge Pi gibt.

Für eine Lernphase LP werden die Testspektren TSi1,...,100 der jeweiligen Materialzusammensetzung Mi zur Bildung eines Materialzusammensetzung Mi spezifischen neuronalen Netzes NNi angelernt. Hierzu können die Trainingsdatensätze TDs entweder über eine Schnittstelle 11 zu einem Lernmittel 12 geführt werden oder über ein Businterface 32 an ein Bussystem 31 weitergegeben werden damit die Trainingsdatensätze TDs an ein übergeordnetes Rechensystem 30 weitergegeben werden können. In diesem übergeordneten Rechensystem 30 befindet sich ein Lernalgorythmus 33, in welchen die Trainingsdatensätze TDs in Materialzusammensetzung Mi spezifische neuronale Netze NNi angelernt werden.

In der Zuordnungstabelle 9 ist weiterhin eine Soll-Materialzusammensetzung SM des Testobjektes 40 abgespeichert. Für die weiteren Materialzusammensetzungen Mi ist eine bekannte Abweichung in der Zusammensetzung zu der Soll-Materialzusammensetzung SM ebenfalls abgespeichert. Es steht ein Berechnungsmittel 13 zur Verfügung, welches ausgestaltet ist, anhand der in der Analyse-Phase AP ermittelten Testspektren für die Materialzusammensetzung mithilfe der Soll-Materialzusammensetzung SM die Abweichung der Materialzusammensetzung SM zu bestimmen.

Weiterhin existiert in der Automatisierungskomponente eine Meldeeinheit 14, welche ausgestaltet ist, die Abweichung der Materialzusammensetzung einer Regel- und/oder Steuereinheit mitzuteilen, welche dann wiederum ausgestaltet ist, in den Fertigungsprozess einzugreifen, so dass das zu fertigende Testobjekt 40 wieder die Soll-Materialzusammensetzung aufweist.

Gemäß FIG 2 sind im Wesentlichen die Erfassungs-Phase EP, die Lern-Phase LP und die Analyse-Phase AP des Verfahrens zur Analyse einer Materialzusammensetzung Mi eines Testobjektes dargestellt. In der Erfassungs-Phase EP wird für das Testobjekt 40 jeweils ein Prüfling P1,P12,P3,...,Pi-2,Pi-1,Pi bereitgestellt. Mit der Impedanz-Messeinheit 5 werden für jeden Prüfling Pi eine Anzahl N an Impedanzspektren ImS aufgenommen. Die aufgenommenen Impedanzspektren ImS sind dann den Prüflingen Pi bzw. der Materialzusammensetzung Mi zugeordnet und ergeben die aufgenommenen Testspektren TSik von dem jeweiligen Prüfling Pi.

In einer Lernphase LP werden für die Anzahl N an Testspektren TSik der jeweiligen Materialzusammensetzung Mi ein Materialzusammensetzung Mi spezifisches neuronales Netz NNi angelernt. Demnach wird aus einem ersten Testspektrum TS1k für einen ersten Prüfling P1 ein erstes Materialzusammensetzung M1 spezifisches neuronales Netz NN1 gebildet und ebenso für einen i-ten Prüfling Pi für eine I-te Materialzusammensetzung Mi wird ein i-tes Testspektrum TSik zusammengefasst und es wird ein i-tes Materialzusammensetzung spezifisches neuronales Netz NNi angelernt bzw. erzeugt oder gebildet.

In der späteren Analyse-Phase AP wird wiederum ein aktuell aufgenommenes Impedanzspektrum ImS des Testobjektes 40 mit den Materialzusammensetzung MMi spezifischen neuronalen Netzen NNi analysiert und als Ergebnis wird die Materialzusammensetzung Mi ausgegeben, welche für das zu analysierende Impedanzspektrum ImS die höchste Übereinstimmung mit dem jeweiligen Materialzusammensetzung Mi spezifischen neuronalen Netz NNi ergeben hat.

Mit der FIG 3 wird noch einmal der Zusammenhang zwischen den bekannten Abweichungen der Prüflinge Pi in der Materialzusammensetzung zu der Zusammensetzung zu der Soll-Materialzusammensetzung SM dargestellt. Mit einem vierten Prüfling wird ein Testspektrum TS4 aufgenommen, welches dem Sollspektrum SS entspricht. Mit einem dritten Prüfling P3 wird dann ein drittes Testspektrum TS3 aufgenommen, welches der Materialzusammensetzung SM des vierten Prüflings P4 minus einer Abweichung D1 entspricht. Mit einem fünften Prüfling P5 wird ein Testspektrum TS aufgenommen, welches einer Materialabweichung des vierten Prüflings P4 plus einer Abweichung D4 entspricht usw..

## Patentansprüche

1. Verfahren zur Analyse einer Materialzusammensetzung eines Testobjekts (40), bei welchem
- mit einer Impedanz-Messeinheit (5) mit einem elektrischen Prüfsignal (PS) ein von einer Frequenz (f) und/oder einer Amplitude des Prüfsignals (PS) abhängiges Impedanzspektrum (ImS) über einen Sensor (6) von dem Testobjekt (40) aufgenommen wird,
- in einer Zuordnungstabelle (9) unterschiedliche Materialzusammensetzungen (Mi) gespeichert werden,
- jeweils ein Prüfling (Pi) für jede Materialzusammensetzung (Mi) bereitgestellt wird,
- in einer Erfassungs-Phase (EP) für das Testobjekt (40) der jeweilige Prüfling (Pi) eingesetzt wird und mit der Impedanz-Messeinheit (5) eine vorgebbare Anzahl (N) von Testspektren (TSik) von dem jeweiligen Prüfling (Pi) aufgenommen werden und diese Anzahl an Testspektren (TSik) als ein Materialzusammensetzung (Mi) spezifischer Trainings-Datensatz (TDS) in einer Probenerfassungseinheit (10) hinterlegt wird,
- in einer Lernphase (LP) für die Anzahl (N) an Testspektren (TSik) der jeweiligen Materialzusammensetzungen (Mi) ein spezifisches neuronales Netz (NNi) angelernt wird,
- in einer Analyse-Phase (AP) ein aktuell aufgenommenes Impedanzspektrum (ImS) des Testobjektes (40) mit den Materialzusammensetzung (Mi) spezifischen neuronalen Netzen (NNi) analysiert wird und als Ergebnis die Materialzusammensetzung (Mi) ausgegeben wird, welche für das zu analysierende Impedanzspektrum (ImS) die höchste Übereinstimmung zu dem jeweiligen Materialzusammensetzungen (Mi) spezifischen neuronalen Netz (NNi) ergeben hat.

2. Verfahren nach Anspruch 2, wobei in der Zuordnungstabelle (9) eine Soll-Materialzusammensetzung (SM) des Testobjektes (40) abgespeichert wird und für die weiteren Materialzusammensetzungen (Mi) bekannte Abweichungen in der Zusammensetzung zu der Soll-Materialzusammensetzung (SM) gewählt werden, wobei anhand in der Analyse-Phase (AP) ermittelten Materialzusammensetzung (Mi) mit Hilfe der Soll-Materialzusammensetzung (SM) eine aktuelle Abweichung der Materialzusammensetzung bestimmt wird.

3. Verfahren nach Anspruch 2, zur Anwendung in einem Fertigungsprozess des Testobjektes (40), wobei mit der Kenntnis der Abweichung der Materialzusammensetzung (Mi) derart in den Fertigungsprozess eingegriffen wird, dass das zu fertigende Testobjekt (40) wieder die Soll-Materialzusammensetzung (SM) aufweist.

4. Verfahren nach einem der Ansprüche 1 bis 3, bei welchem die Erfassungs-Phase (EP) auf einer lokalen Automatisierungskomponente (1) durchgeführt wird, und die Materialzusammensetzung (Mi) spezifischen Trainings-Datensätze an ein übergeordnetes Rechensystem (30) gesendet werden, wobei die Lern-phase (LP) auf dem übergeordneten Rechensystem (30) durchgeführt wird, und die erlernten oder errechneten Materialzusammensetzung (Mi) spezifischen neuronalen Netze (NNi) von dem übergeordneten Rechensystem (30) an die lokale Automatisierungskomponente (1) zurückgesendet wird und für die Analyse-Phase (AP) abgespeichert wird.

5. Verfahren nach einem der Ansprüche 1 bis 4, bei welchen das Impedanzspektrum (ImS) als komplexwertiger Verlauf der Frequenz angegeben wird, und für einen Betrag, einen Phasenwinkel, einen Realteil und einen Imaginärteil jeweils separate Materialzusammensetzung (Mi) spezifische neuronale Netze (NNi) angelernt werden, welche in der Analyse-Phase (AP) für den Vergleich mit dem aktuell aufgenommenen Impedanzspektrum (ImS) parallel arbeiten um eine Genauigkeit der Aussage zu der zu ermittelnden Materialzusammensetzung zu erhöhen.

6. Automatisierungskomponente (1) umfassend
- eine Impedanzmesseinheit (5) ausgestaltet mit einem elektrischen Prüfsignal (PS) ein von einer Frequenz und/oder einer Amplitude des Prüfsignals (PS) abhängiges Impedanzspektrum (ImS) über einen Sensor (6) von einem Testobjekt (40) aufzunehmen,
- einen Prozessorbaustein (7) ausgestaltet neuronale Netze (NN) zu verarbeiten,
- einen Datenspeicher (8) in dem ein neuronales Netz (NN) abgespeichert ist,
**gekennzeichnet durch**,
- eine Zuordnungstabelle (9), in welcher unterschiedliche Materialzusammensetzungen (Mi) gespeichert sind,
- eine Probenerfassungseinheit (10), welche ausgestaltet ist in einer Erfassungs-Phase (EP)) mittels der Impedanzmesseinheit (5) eine vorgebbare Anzahl (N) von Testspektren (TSik) für die in der Zuordnungstabelle (9) angegebenen Materialzusammensetzungen (Mi) aufzunehmen,
- einen Datenmanager (2) ausgestaltet die Anzahl an Testspektren (TSik) als Materialzusammensetzung (Mi) spezifische Trainings-Datensätze (TDS) in der Probenerfassungseinheit (10) zu hinterlegen und zu verwalten,
- eine Schnittstelle (11) zu einem Lernmittel (12), welches ausgestaltet ist in einer Lernphase (LP) für die jeweiligen Trainings-Datensätze (TDS) jeweils eine Materialzusammensetzung (Mi) spezifisches neuronales Netz (NNi) bereitzustellen,
- den Datenspeicher (8), in dem die spezifischen neuronalen Netze (NNi) gespeichert sind,
- eine Ausgestaltung des Prozessorbausteins (7), welche es ermöglicht in einer Analyse-Phase (AP) das aktuell aufgenommene Impedanzspektrum (ImS) mit den spezifischen neuronalen Netzen (NNKᵢ) zu analysieren und als Ergebnis die Materialzusammensetzung (Mi) auszugeben, welche für das zu analysierende Impedanzspektrum (ImS) die höchste Übereinstimmung zu dem jeweiligen Materialzusammensetzung (Mi) spezifischen neuronalen Netz (NNi) ergeben hat.

7. Automatisierungskomponente (1) nach Anspruch 6, wobei in der Zuordnungstabelle (9) eine Soll-Materialzusammensetzung (SM) des Testobjektes (40) abgespeichert ist und die weiteren Materialzusammensetzungen (Mi) mit bekannten Abweichungen in der Zusammensetzung zu der Soll-Materialzusammensetzung (SM) abgespeichert sind, wobei ein Berechnungsmittel (13) vorhanden ist, welches ausgestaltet ist anhand in der Analyse-Phase (AP) ermittelten Materialzusammensetzung (Mi) mit Hilfe der Soll-Materialzusammensetzung (SM) die Abweichung der Materialzusammensetzung zu bestimmen.

8. Automatisierungskomponente (1) nach Anspruch 7, ausgestaltet zur Anwendung in einem Fertigungsprozess des Testobjektes (40) umfassend eine Meldeeinheit (14), welche ausgestaltet ist die Abweichung der Materialzusammensetzung einer Regel-und/oder Steuereinheit mitzuteilen, welche wiederum ausgestaltet ist in den Fertigungsprozess einzugreifen, so dass das zu fertigende Testobjekt (40) wieder die Soll-Materialzusammensetzung (SM) aufweist.

9. Automatisierungskomponente (1) nach einem der Ansprüche 6 bis 8, aufweisend eine Datentransfereinheit (14), welche ausgestaltet ist mit dem Datenmanager (2) die Materialzusammensetzung (Mi) spezifischen Trainings-Datensätze (TDS) an ein übergeordnetes Rechensystem (30) zu senden.
